# EUROPÄISCHE PATENTSCHRIFT

(11) **EP 1 683 680 B1**
(45) Veröffentlichungstag und Bekanntmachung des Hinweises auf die Patenterteilung: **25.06.2008**
(21) Anmeldenummer: 06090075.0
(22) Anmeldetag: 31.10.2001
(51) Int. Cl.: B60R 11/02

(54) **Anzeigevorrichtung mit wenigstens einem Multifunktions-Bedienelement**
Display device having at least one multi-functional selector
Dispositif de visualisation présentant au moins un sélecteur multifonctionnel

(30) Priorität: 14.11.2000 DE 10056303; 07.03.2001 DE 10110900
(43) Veröffentlichungstag der Anmeldung: 26.07.2006
(62) Teilanmeldung aus: 01125937.1
(73) Patentinhaber: Volkswagen AG, 38436 Wolfsburg (DE)
(72) Erfinder: Heimermann, Matthias, 38302 Wolfenbüttel (DE); Wengelnik, Heino, Dr., 38442 Wolfsburg (DE); Schnier, Carsten, 38259 Salzgitter (DE)
(74) Vertreter: Patentanwälte Bressel und Partner

(56) Entgegenhaltungen:
- EP-A- 0 366 132
- WO-A-99/35008
- DE-C- 4 338 171
- US-A- 6 104 399

## Beschreibung

Die Erfindung bezieht sich auf eine Anzeigevorrichtung mit wenigstens einem Multifunktions-Bedienelement, insbesondere für ein Fahrzeug, wobei das Multifunktions-Bedienelement insbesondere zur Auswahl von auf der Anzeigevorrichtung sichtbaren Funktionsgruppen und/oder individueller Funktionen dient.

Bei modernen Komfortgeräten, die ständig zusätzliche Funktionen mit immer mehr Optionen anbieten, sind wegen der Begrenzung des Bauraumes für die mit den entsprechenden Anzeigevorrichtungen zusammenwirkenden Bedienelemente Multifunktions-Bedienelemente geschaffen worden, mittels derer verschiedene Funktionen bedienbar sind. So ist beispielsweise aus der EP 0 366 132 B1 eine mit einer Anzeigevorrichtung zusammenwirkende Multifunktions-Bedieneinrichtung für Kraftfahrzeuge bekannt, bei der die Auswahl von Funktionsgruppen (MENÜS) und die Auswahl individueller Funktionen mittels Drehschaltern erfolgt, und bei der eine ENTER-Funktion auslösbar ist, wobei ein und derselbe bidirektionale Drehschalter zur Menü-Auswahl und individuellen Funktionsauswahl dient. Der besagte Drehschalter weist dabei Raststellungen auf, denen Menüs oder einzelne Funktionen zugeordnet sind, wobei die ENTER-Funktion durch eine Axialbewegung des Drehschalters auslösbar ist. Es dient eine solche Multifunktions-Bedieneinrichtung beispielsweise zur Zieleingabe eines Navigationssystems. Es wird hierzu auf der Anzeigevorrichtung eine alphanumerische Tastatur abgebildet, in der sich der Benutzer mittels der bidirektionalen Bewegung des Drehschalters vor- und zurückbewegen kann. Wenn dann der Cursor sich auf dem gewünschten alphanumerischen Zeichen befindet, kann dieses durch eine Axialbewegung des Drehschalters ausgewählt und in das Navigationssystem übernommen werden. Bei dieser bekannten Anordnung ist nachteilig, daß die Anzeigevorrichtung mit dem Multifunktions-Bedienelement hinsichtlich der Art der Anzeigbarkeit und hinsichtlich der Art der Bedienbarkeit sehr eingeschränkt ist. Es ist insbesondere eine Anpassung der Funktionen dieser Anordnung an spezielle Beanspruchungen oder die individuellen Wünsche der Bedienperson nicht möglich.

In DE 43 38 171 C1, die die Merkmale des Oberbegriffs des unabhängigen Anspruchs 1 zeigt, ist ein Tastatur- und Anzeigesystem zur Bedienung von Komponenten in einem Kraftfahrzeug mit wenigstens einer Ebenenwahltaste zur Anwahl von Funktionsebenen und Funktionsanwahltasten bekannt, welchen in den diversen Funktionsebenen verschiedene angezeigte Funktionen zugeordnet sind. Die den Funktionswahltasten zugeordneten Funktionen in den mit den Ebenenwahltasten angewählten Funktionsebenen sind individuell festlegbar.

Aus WO 99/35008 A1 ist ein Automobilcomputersystem mit einem Computer offenbart, auf dem ein Betriebssystem mit einer offenen Plattform betrieben wird. Es wird eine Benutzerschnittstelle beschrieben, mit der über graphische Symbole Funktionen anwählbar sind. Die Symbole lassen sich zumindest teilweise nummerierten Abkürzungstasten zuweisen. Über die Nummern der Abkürzungstasten erfolgt für die zugeordneten Funktionen eine Priorisierung der Symbole. Die Symbole werden in der Reihenfolge der Priorisierung auf einer Anzeige dargestellt. Eine Auswahl dieser den Abkürzungstasten zugeordneten Funktionen kann über ein Betätigen der Abkürzungstasten oder, wie für die übrigen Funktionen, über ein Bewegen des zugehörigen Symbols in einen fixierten Fokus, beispielsweise mittels mehrmaligen Betätigens einer "Start"-Taste, und über ein Betätigen einer Eingabetaste erfolgen. Auf dem Computersystem können Benutzerprogramme ausgeführt werden, die mit einem der Symbole verknüpft sein können.

Der Erfindung liegt die Aufgabe zugrunde, die bekannten Anzeigevorrichtungen mit wenigstens einem Multifunktions-Bedienelement unter Beibehaltung der bisherigen Vorteile in der Weise zu verbessern, daß in einfacher Weise eine Anpassung der Funktionseigenschaften an die jeweiligen Beanspruchungen und individuellen Wünsche der Bedienperson möglich ist. Die gewünschte Anordnung soll dabei einfach und wirtschaftlich herstellbar und gut in der Handhabung sein.

Die Aufgabe wird erfindungsgemäß dadurch gelöst, daß die Anzeigevorrichtung mit dem wenigstens einen Multifunktions-Bedienelement mit Mitteln zur Funktionsausweitung und/oder Funktionseinengung versehen ist. Die Mittel zur Funktionsausweitung und/oder Funktionseinengung umfassen eine Einrichtung zur Anpassung über die Software für die Anzeigevorrichtung. Es wird hierdurch die Anpassungsfähigkeit der erfindungsgemäßen Anordnung zusätzlich wesentlich erweitert. Ferner sind die Mittel zur Funktionsausweitung und/oder Funktionseinengung erfindungsgemäß zu einer belastungsabhängigen, automatischen Anpassung in Abhängigkeit der Umgebungsbedingungen über die Software für die Anzeigevorrichtung ausgebildet. Dadurch wird eine Anpaßbarkeit der erfindungsgemäßen Anzeigevorrichtung z.B. in Abhängigkeit der Geschwindigkeit, laufender Aktionen etc. ermöglicht. Auf diese Weise wird erstmalig mit einfachen Mitteln die Möglichkeit geschaffen, eine Anzeigevorrichtung mit wenigstens einem Multifunktions-Bedienelement insbesondere für ein Fahrzeug in variabler Weise an die jeweilige Beanspruchung und die individuellen Wünsche der Bedienperson anzupassen. Die erfindungsgemäße Anordnung ist dabei einfach und wirtschaftlich herstellbar und gut in der Handhabung.

Nach einem anderen Merkmal der vorliegenden Erfindung ist die Einrichtung zur Anpassung über die Software für die Anzeigevorrichtung zur Bildung einer Softwarejalousie ausgebildet ist.

Bei einer abgewandelten Ausführungsform der vorliegenden Erfindung ist die Einrichtung zur Anpassung über die Software für die Anzeigevorrichtung zur Abschaltung einzelner Bildschirmbereiche der Anzeigevorrichtung ausgebildet.

Nach einem weiteren Merkmal der vorliegenden Erfindung sind die Mittel zur Funktionsausweitung und/oder Funktionseinengung zur individuellen Anpassung an das Benutzerprofil über die Software für die Anzeigevorrichtung ausgebildet. Auf diese Weise kann ein persönlich abgestimmtes Funktionsangebot für die erfindungsgemäße Anzeigevorrichtung erreicht werden.

Bei einer weiteren Ausführungsform der vorliegenden Erfindung sind die Mittel zur Funktionsausweitung und/oder Funktionseinengung zu einer lernfähigen und/oder intelligenten Anpassung über die Software für die Anzeigevorrichtung ausgebildet. Dadurch wird die Anpassungsfähigkeit weiterhin erhöht.

Nach einem letzten Merkmal der vorliegenden Erfindung ist vorgesehen, daß die Mittel zur Funktionsausweitung und/oder Funktionseinengung zu einer Anpassung durch eine Priorisierung und/oder Splittung der Anwendungen über die Software für die Anzeigevorrichtung ausgebildet sind. Dabei sind zweckmäßig die Mittel zur Funktionsausweitung und/oder Funktionseinengung zu einer Anpassung durch eine Priorisierung und/oder Splittung von häufig benutzten Standardfunktionen gegenüber seltener benutzten Funktionen über die Software für die Anzeigevorrichtung ausgebildet.

Die vorliegende Erfindung ist in der einzigen Figur der Zeichnung in einem Ausführungsbeispiel dargestellt. Es zeigt:

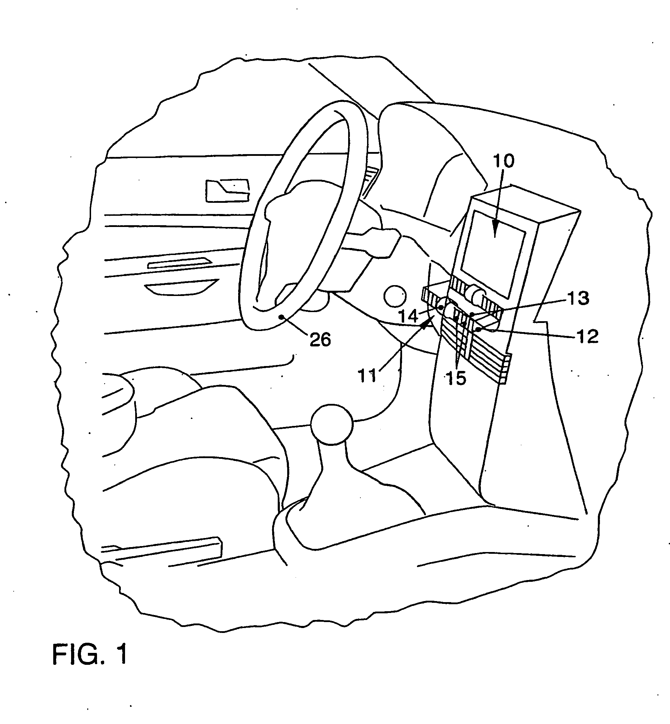

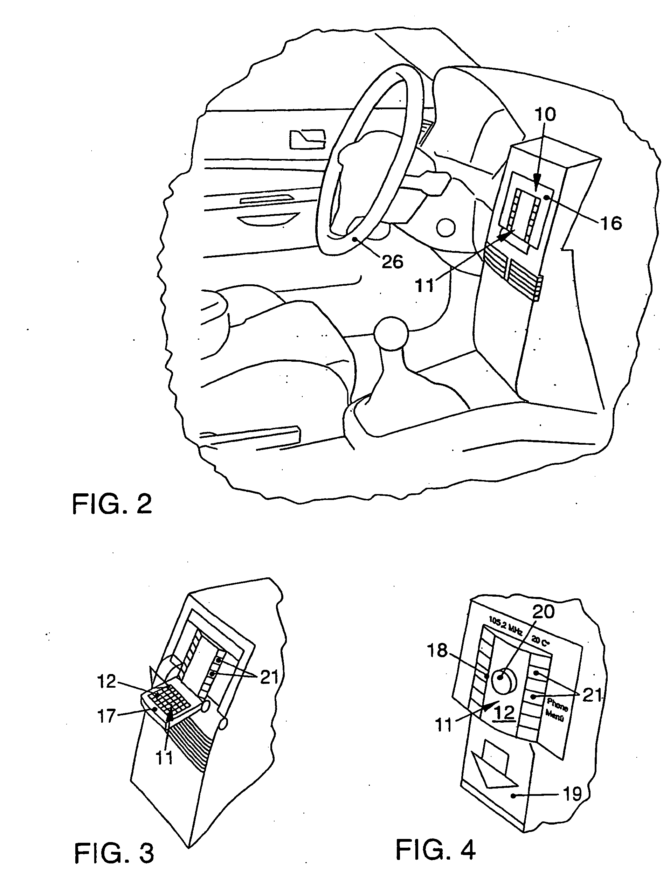

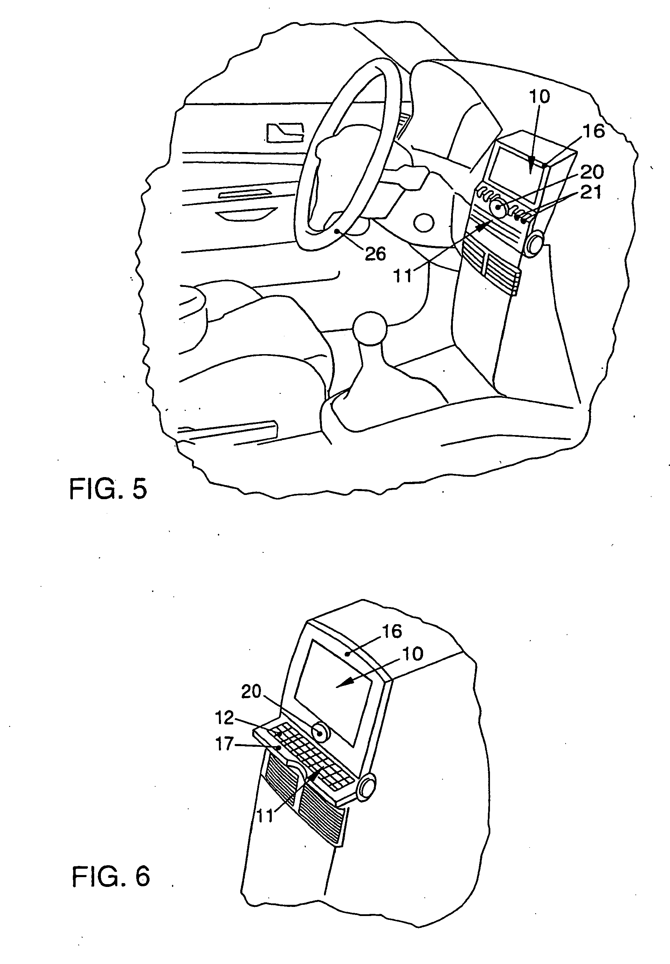

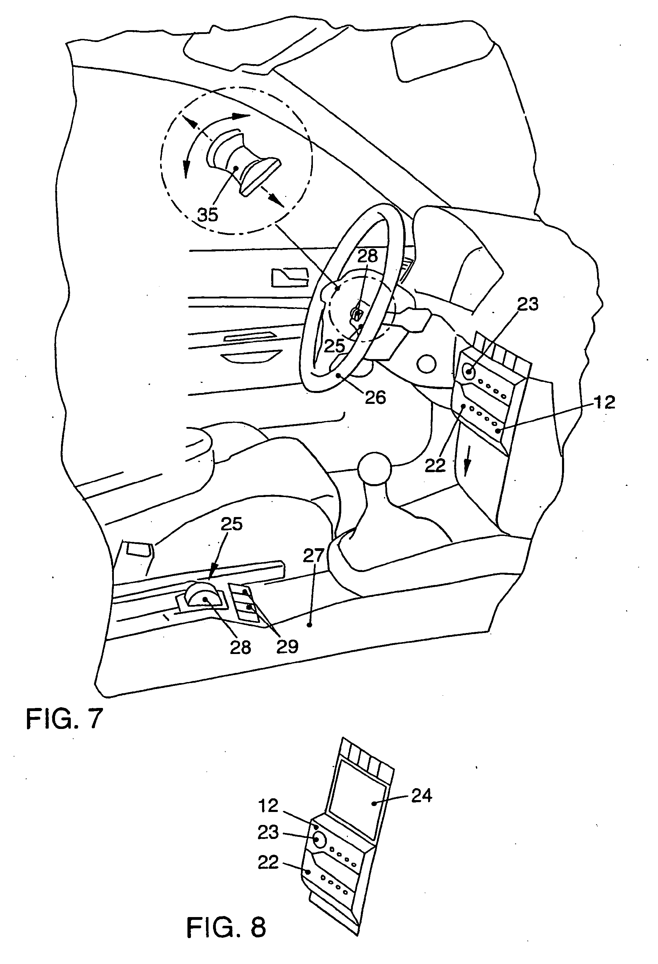

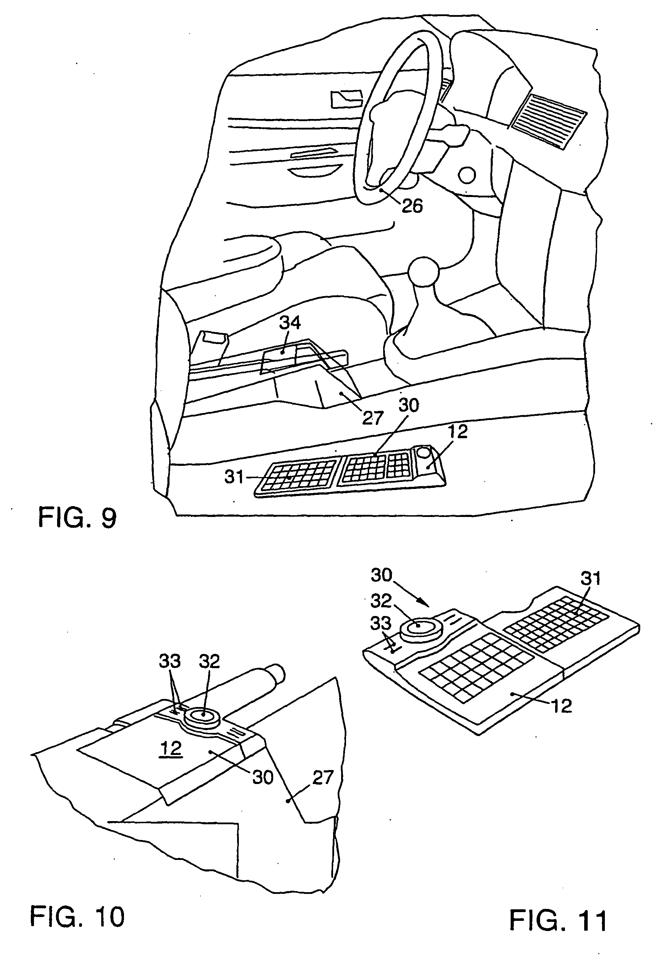

- Fig. 1: eine schematische perspektivische Darstellung einer Ausführungsform der erfindungsgemäßen Anzeigevorrichtung mit einem Multifunktions-Bedienelement in der Mittelkonsole eines Fahrzeuges.

Die erfindungsgemäße Anzeigevorrichtung ist generell mit 10 bezeichnet und umfaßt wenigstens ein mit 11 bezeichnetes Multifunktions-Bedienelement. Die Anzeigevorrichtung 10 ist insbesondere für ein Fahrzeug vorgesehen. Das Multifunktions-Bedienelement 11 dient insbesondere zur Auswahl von auf der Anzeigevorrichtung 10 sichtbaren Funktionsgruppen und/oder individuellen Funktionen.

Die erfindungsgemäße Anzeigevorrichtung 10 mit dem wenigstens einen Multifunktions-Bedienelement 11 ist erfindungsgemäß mit Mitteln 12 zur Funktionsausweitung und/oder Funktionseinengung versehen. Es umfassen diese Mittel 12 zur Funktionsausweitung und/oder Funktionseinengung bei dem in der Fig. 1 der Zeichnung dargestellten Ausführungsbeispiel der vorliegenden Erfindung u.a. eine im Bereich der Anzeigevorrichtung 10 angeordnete, ausziehbare Tastatur 13. Die Anzeigevorrichtung 10 mit dem Multifunktions-Bedienelement 11 ist dabei in einer nicht bezeichneten Mittelkonsole im Innenraum eines Fahrzeuges angeordnet. Es umfaßt dabei die ausziehbare Tastatur 13 ein um seine Längsachse rotierbares Stellrad 14 sowie zusätzliche Betätigungselemente 15, die insbesondere als Soft-Key-Betätigungselemente ausgebildet sein können. In der prioritätsbegründenden Anmeldung sind dazu diverse andere Möglichkeiten für die Ausgestaltung der Mittel 12 zur Funktionsausweitung und/oder Funktionseinengung angegeben.

Bei der erfindungsgemäßen Anzeigevorrichtung 10 umfassen die Mittel 12 zur Funktionsausweitung und/oder Funktionseinengung eine Einrichtung zur Anpassung über die Software für die Anzeigevorrichtung 10. Dadurch wird die Anpassungsfähigkeit der erfindungsgemäßen Anordnung zusätzlich wesentlich erweitert.

Bei der erfindungsgemäßen Anzeigevorrichtung 10 sind die Mittel 12 zur Funktionsausweitung und/oder Funktionseinengung zu einer belastungsabhängigen, automatischen Anpassung über die Software für die Anzeigevorrichtung 10 ausgebildet. Dabei sind die Mittel 12 zur Funktionsausweitung und/oder Funktionseinengung zu einer Anpassung in Abhängigkeit der Umgebungsbedingungen über die Software für die Anzeigevorrichtung 10 ausgebildet. Dadurch kann eine Anpassung der erfindungsgemäßen Anzeigevorrichtung 10 z.B. in Abhängigkeit der Geschwindigkeit, laufender Aktionen etc. erfolgen.

Die Einrichtung zur Anpassung über die Software für die Anzeigevorrichtung 10 kann zur Bildung einer Softwarejalousie ausgebildet sein. Bei einer abgewandelten Ausführungsform ist die Einrichtung zur Anpassung über die Software für die Anzeigevorrichtung 10 zur Abschaltung einzelner Bildschirmbereiche der Anzeigevorrichtung 10 ausgebildet.

Bei einer weiteren Ausführungsform der vorliegenden Erfindung sind die Mittel 12 zur Funktionsausweitung und/oder Funktionseinengung zur individuellen Anpassung an das Benutzerprofil über die Software für die Anzeigevorrichtung 10 ausgebildet. Es kann dadurch beispielsweise ein persönlich abgestimmtes Funktionsangebot für die erfindungsgemäße Anzeigevorrichtung 10 erreicht werden.

Bei einer anderen Ausführungsform der vorliegenden Erfindung sind die Mittel 12 zur Funktionsausweitung und/oder Funktionseinengung zu einer lernfähigen und/oder intelligenten Anpassung über die Software für die Anzeigevorrichtung 10 ausgebildet, wodurch wird die Anpassungsfähigkeit weiterhin erhöht wird.

Nach einem letzten Vorschlag der vorliegenden Erfindung ist vorgesehen, daß die Mittel 12 zur Funktionsausweitung und/oder Funktionseinengung zu einer Anpassung durch eine Priorisierung und/oder Splittung der Anwendungen über die Software für die Anzeigevorrichtung 10 ausgebildet sind. Dabei können die Mittel 12 zur Funktionsausweitung und/oder Funktionseinengung zu einer Anpassung durch eine Priorisierung und/oder Splittung von häufig benutzten Standardfunktionen gegenüber seltener benutzten Funktionen über die Software für die Anzeigevorrichtung 10 ausgebildet sein.

Mit der erfindungsgemäßen Anzeigevorrichtung 10 mit Multifunktions-Bedienelement 11 ist eine einfache Anpassung an die jeweilige Beanspruchung oder die individuellen Wünsche der Bedienperson möglich. Es wird dabei je nach Ausbildung der Mittel 12 zur Funktionsausweitung und/oder Funktionseinengung eine Auswahl von auf der Anzeigevorrichtung 10 sichtbaren Funktionsgruppen und/oder individuellen Funktionen wesentlich erleichtert. Die Auswahl kann dabei sowohl durch eine Anpassung der Hardware als auch der Software erfolgen.

Wie bereits erwähnt, sind die dargestellten Ausführungsformen nur beispielhafte Verwirklichungen der Erfindung, diese ist nicht darauf beschränkt, es sind vielmehr noch mancherlei Abänderungen und Ausbildungen möglich. So kann insbesondere die Anpassung über die Software für die Anzeigevorrichtung 10 von den beschriebenen Ausführungsformen abweichende Ausgestaltungsformen aufweisen.

### BEZUGSZEICHENLISTE

- 10: Anzeigevorrichtung
- 11: Multifunktions-Bedienelement
- 12: Mittel zur Funktionserweiterung und/oder Funktionseinengung
- 13: ausziehbare Tastatur
- 14: Stellrad (von 13)
- 15: zusätzliche Bedienelemente (von 13)

## Patentansprüche

1. Anzeigevorrichtung (10) mit wenigstens einem Multifunktions-Bedienelement (11), insbesondere für ein Fahrzeug, wobei das Multifunktions-Bedienelement (11) zur Auswahl von auf der Anzeigevorrichtung (10) sichtbaren Funktionsgruppen und/oder individuellen Funktionen dient, **dadurch gekennzeichnet, daß** die Anzeigevorrichtung (10) mit dem wenigstens einen Multifunktions-Bedienelement (11) mit Mitteln (12) zur Funktionsausweitung und/oder Funktionseinengung versehen ist, wobei die Mittel (12) zur Funktionsausweitung und/oder Funktionseinengung eine Einrichtung zur Anpassung über die Software für die Anzeigevorrichtung (10) umfassen und die Mittel (12) zur Funktionsausweitung und/oder Funktionseinengung zu einer belastungsabhängigen, automatischen Anpassung in Abhängigkeit der Umgebungsbedingungen über die Software für die Anzeigevorrichtung (10) ausgebildet sind.

2. Anzeigevorrichtung nach Anspruch 1, **dadurch gekennzeichnet, daß** die Einrichtung zur Anpassung über die Software für die Anzeigevorrichtung (10) zur Bildung einer Softwarejalousie ausgebildet ist.

3. Anzeigevorrichtung nach Anspruch 1 oder 2, **dadurch gekennzeichnet, daß** die Einrichtung zur Anpassung über die Software für die Anzeigevorrichtung (10) zur Abschaltung einzelner Bildschirmbereiche der Anzeigevorrichtung (10) ausgebildet ist.

4. Anzeigevorrichtung nach einem der Ansprüche 1 bis 3, **dadurch gekennzeichnet, daß** die Mittel (12) zur Funktionsausweitung und/oder Funktionseinengung zur individuellen Anpassung an das Benutzerprofil über die Software für die Anzeigevorrichtung (10) ausgebildet sind.

5. Anzeigevorrichtung nach einem der Ansprüche 1 bis 4, **dadurch gekennzeichnet, daß** die Mittel (12) zur Funktionsausweitung und/oder Funktionseinengung zu einer lernfähigen und/oder intelligenten Anpassung über die Software für die Anzeigevorrichtung (10) ausgebildet sind.

6. Anzeigevorrichtung nach einem der Ansprüche 1 bis 5, **dadurch gekennzeichnet, daß** die Mittel (12) zur Funktionsausweitung und/oder Funktionseinengung zu einer Anpassung durch eine Priorisierung und/oder Splittung der Anwendungen über die Software für die Anzeigevorrichtung (10) ausgebildet sind.

7. Anzeigevorrichtung nach Anspruch 6, **dadurch gekennzeichnet, daß** die Mittel (12) zur Funktionsausweitung und/oder Funktionseinengung zu einer Anpassung durch eine Priorisierung und/oder Splittung von häufig benutzten Standardfunktionen gegenüber seltener benutzten Funktionen über die Software für die Anzeigevorrichtung (10) ausgebildet sind.

## Claims

1. Display device (10) having at least one multifunction control element (11), in particular for a vehicle, in which the multifunction control element (11) serves to select function groups and/or individual functions visible on the display device (10), **characterized in that** the display device (10) having the at least one multifunction control element (11) is provided with means (12) for function expansion and/or function restriction, wherein the means (12) for function expansion and/or function restriction comprise an arrangement for adaptation via the software for the display device (10) and the means (12) for function expansion and/or function restriction are designed for load-dependent automatic adaptation via the software for the display device (10) depending on the background conditions.

2. Display device according to Claim 1, **characterized in that** the arrangement for adaptation via the software for the display device (10) is designed to form a software jalousie.

3. Display device according to Claim 1 or 2, **characterized in that** the arrangement for adaptation via the software for the display device (10) is designed to switch off individual screen areas of the display device (10).

4. Display device according to one of Claims 1 to 3, **characterized in that** the means (12) for function expansion and/or function restriction are designed for individual adaptation to the user profile via the software for the display device (10).

5. Display device according to one of Claims 1 to 4, **characterized in that** the means (12) for function expansion and/or function restriction are designed for learning-capable and/or intelligent adaptation via the software for the display device (10).

6. Display device according to one of Claims 1 to 5, **characterized in that** the means (12) for function expansion and/or function restriction are designed for adaptation by means of a prioritization and/or splitting of the applications via the software for the display device (10).

7. Display device according to Claim 6, **characterized in that** the means (12) for function expansion and/or function restriction are designed for adaptation by means of a prioritization and/or splitting of frequently used standard functions in relation to more seldomly used functions via the software for the display device (10).

## Revendications

1. Dispositif d'affichage (10) comprenant au moins un élément de commande multifonction (11), en particulier pour un véhicule, l'élément de commande multifonction (11) servant à sélectionner des fonctions individuelles et/ou des groupes de fonctions visibles sur le dispositif d'affichage (10), **caractérisé en ce que** le dispositif d'affichage (10) comprenant l'au moins un élément de commande multifonction (11) est doté de moyens (12) servant à développer les fonctions et/ou à limiter les fonctions, les moyens (12) de développement et/ou de limitation des fonctions comprenant un équipement d'adaptation par le biais du logiciel du dispositif d'affichage (10) et les moyens (12) de développement et/ou de limitation des fonctions étant réalisés pour effectuer une adaptation automatique et en fonction de la charge, en fonction des conditions de l'environnement par le biais du logiciel du dispositif d'affichage (10).

2. Dispositif d'affichage selon la revendication 1, **caractérisé en ce que** l'équipement d'adaptation par le biais du logiciel du dispositif d'affichage (10) est réalisé pour former une jalousie logiciel.

3. Dispositif d'affichage selon la revendication 1 ou 2, **caractérisé en ce que** l'équipement d'adaptation par le biais du logiciel du dispositif d'affichage (10) est réalisé pour mettre hors circuit certaines zones de l'écran du dispositif d'affichage (10).

4. Dispositif d'affichage selon l'une quelconque des revendications 1 à 3, **caractérisé en ce que** les moyens (12) de développement et/ou de limitation des fonctions sont réalisés pour effectuer une adaptation individuelle au profil d'utilisateur, par le biais du logiciel du dispositif d'affichage (10).

5. Dispositif d'affichage selon l'une quelconque des revendications 1 à 4, **caractérisé en ce que** les moyens (12) de développement et/ou de limitation des fonctions sont réalisés pour effectuer une adaptation intelligente et/ou avec capacité d'apprentissage par le biais du logiciel du dispositif d'affichage (10).

6. Dispositif d'affichage selon l'une quelconque des revendications 1 à 5, **caractérisé en ce que** les moyens (12) de développement et/ou de limitation des fonctions sont réalisés pour effectuer une adaptation par une prioritisation et/ou une scission des applications par le biais du logiciel du dispositif d'affichage (10).

7. Dispositif d'affichage selon la revendication 6, **caractérisé en ce que** les moyens (12) de développement et/ou de limitation des fonctions sont réalisés pour effectuer une adaptation par une prioritisation et/ou une scission des fonctions standards souvent utilisées par rapport aux fonctions rarement utilisées par le biais du logiciel du dispositif d'affichage (10).
